# EUROPÄISCHE PATENTSCHRIFT

(11) **EP 3 317 171 B1**
(45) Veröffentlichungstag und Bekanntmachung des Hinweises auf die Patenterteilung: **22.05.2019**
(21) Anmeldenummer: 16729938.7
(22) Anmeldetag: 20.06.2016
(51) Int. Cl.: B62H 3/04, B62H 3/08, B62H 3/12

(54) **VORRICHTUNG ZUM TRANSPORTIEREN VON FAHRRÄDERN**
DEVICE FOR TRANSPORTING BICYCLES
DISPOSITIF DE TRANSPORT DE BICYCLETTES

(30) Priorität: 02.07.2015 AT 4232015
(43) Veröffentlichungstag der Anmeldung: 09.05.2018
(73) Patentinhaber: Innova Patent GmbH, 6922 Wolfurt (AT)
(72) Erfinder: ÖSTERLE, Manfred, 6971 Hard (AT)
(74) Vertreter: Beer & Partner Patentanwälte KG
(86) Internationale Anmeldenummer: PCT/EP2016/064157
(87) Internationale Veröffentlichungsnummer: WO 2017/001224

(56) Entgegenhaltungen:
- EP-A1- 1 741 623
- WO-A1-2005/095194
- DE-A1- 19 512 910
- DE-C- 485 031
- DE-U1- 20 309 511

## Beschreibung

Die Erfindung betrifft eine Vorrichtung zum Halten bzw. Transportieren von Fahrrädern mit einer in Gebrauchslage oberen und unteren Halteeinrichtung für ein Laufrad der Fahrräder, die an einem Träger montiert sind, wobei die obere Halteeinrichtung um eine Schwenkachse am Träger verschwenkbar gelagert ist und wobei die obere und untere Halteeinrichtung über wenigstens eine Zugstange miteinander verbunden sind, die mit der oberen Halteeinrichtung gelenkig verbunden ist (DE 485 031 C). DE 485 031 C ist der nächstliegende Stand der Technik des Anspruchs 1 und offenbart die Merkmale des Oberbegriffs des Anspruchs 1.

Die Erfindung betrifft des Weiteren ein Fahrbetriebsmittel, insbesondere Sessel, einer Seilbahn mit wenigstens einer derartigen Vorrichtung.

Eine derartige Vorrichtung soll neben anderen Verwendungsmöglichkeiten insbesondere Fahrgästen die Möglichkeit bieten, ihre Fahrräder auf der Bergfahrt und/oder Talfahrt mitnehmen zu können. Die Vorrichtung soll dabei so gestaltet sein, dass das Beladen bzw. Entladen der Vorrichtung mit bzw. von den Fahrrädern möglichst einfach erfolgen kann, und dennoch ein sicherer Halt der Fahrräder in der Vorrichtung gewährleistet ist und dies insbesondere ohne den Seilbahnbetrieb zu behindern. Bei einer aus der FR 2 958 255 A bekannten Vorrichtung sind sowohl die obere als auch die untere Halteeinrichtung schwenkbar, wobei sich die direkt miteinander verbundenen Halteeinrichtungen aufeinander zu bewegen und das Laufrad festlegen, wenn das Laufrad auf die untere Halteeinrichtung aufgelegt wird und sich diese durch das Gewicht des Fahrrades absenkt. Zum Abnehmen des Fahrrades und Öffnen der Vorrichtung muss das Fahrrad hochgehoben werden, wobei sich aber sowohl die untere als auch die obere Halteeinrichtung nach oben bewegen, was für das Be- und Entladen unpraktisch ist. Diese zusätzliche Vertikalbewegung ist insbesondere bei schwereren Fahrrädern bzw. für schwächere oder kleinere Personen schwierig.

Der Erfindung liegt daher die Aufgabe zugrunde, eine Vorrichtung der eingangs genannten Art zu schaffen, bei der das Beladen bzw. Entladen mit bzw. von Fahrrädern möglichst einfach erfolgen kann.

Gelöst wird diese Aufgabe bei einer Vorrichtung der eingangs genannten Art dadurch, dass die untere Halteeinrichtung bei Gebrauch starr mit dem Träger verbunden ist, dass die Zugstange mit der unteren Halteeinrichtung über eine Kupplungsstange gelenkig verbunden ist und dass an der Zugstange und/oder der Kupplungsstange eine untere Stützeinrichtung für das Laufrad angeordnet ist.

Durch die bei Gebrauch starr befestigte, untere Halteeinrichtung ist die beim Beladen und Entladen erforderliche Höhenänderung des Fahrrades geringer, wodurch das Beladen und Entladen einfacher durchführbar ist. Ein sicherer Halt des Laufrades ist dennoch gewährleistet.

In einer bevorzugten Ausführungsform der Erfindung ist im Bereich des freien Endes der unteren Halteeinrichtung eine hintere Stützeinrichtung angeordnet. Auf dieser an der starr montierten unteren Halteeinrichtung angeordneten Stützeinrichtung kann das Laufrad beim Beladen und Entladen aufgestützt werden, was für die Bedienungsperson den Komfort und die Sicherheit erhöht.

Bevorzugt ist bei der Erfindung weiters, wenn die Vorrichtung eine vordere Stützeinrichtung für den dem Träger zugewandten Bereich des Laufrades aufweist, da auf diese Weise die Position des Laufrades auf der Seite des Trägers genau definiert ist.

Des Weiteren ist bei der Erfindung bevorzugt, wenn ein die Zugstange und die Kupplungsstange verbindendes Gelenk in Gebrauchslage vertikal unter einer die vordere und hintere Stützeinrichtung verbindenden Linie liegt, und insbesondere, wenn die untere Stützeinrichtung im Bereich des Gelenks angeordnet ist. Auf diese Weise wird ein stabiles Stützdreieck für das Laufrad geschaffen, wobei gleichzeitig die obere Halteeinrichtung gegen das Laufrad nach unten gezogen wird.

Im Rahmen der Erfindung ist es bevorzugt, wenn wenigstens eine der Stützeinrichtungen als Rolle ausgeführt ist, wobei es des Weiteren bevorzugt ist, wenn die Rolle im Mittelbereich einen kleineren Durchmesser als an den Randbereichen aufweist. Dies erleichtert das Beladen und Entladen der Vorrichtung mit Fahrrädern.

Um die obere Halteeinrichtung beweglich zu montieren, weist diese vorzugsweise eine Ausnehmung, vorzugsweise ein Langloch, auf, in die ein am Träger befestigter Arretierungsbolzen eingreift. Damit ist die Bewegung der oberen Halteeinrichtung sowohl nach oben als auch nach unten begrenzt und es kann nicht zu unerwünschten Stellungen der oberen Halteeinrichtung kommen.

Durch die in Gebrauchslage im Wesentlichen horizontale Ausrichtung der Halteeinrichtungen der erfindungsgemäßen Vorrichtung stellen diese eine Behinderung dar, wenn die Fahrbetriebsmittel garagiert werden. Um dies zu vermeiden, kann die untere Halteeinrichtung erfindungsgemäß über eine Schwenkachse und einen Arretierungsbolzen mit dem Träger verbunden und der Arretierungsbolzen entfernbar und die untere Halteeinrichtung in eine Parkstellung verschwenkbar sein. Auf diese Weise kann die untere, im Betrieb starre Halteeinrichtung z.B. nach unten geklappt werden.

Wenn für die obere und untere Halteeinrichtung ein gemeinsamer Arretierungsbolzen verwendet wird, können beide Halteeinrichtungen gemeinsam z.B. nach unten geklappt werden, indem nur ein einziger Arretierungsbolzen gelöst wird.

Weitere bevorzugte Ausführungsformen der Erfindung sind Gegenstand der übrigen Unteransprüche.

Weitere Merkmale und Vorteile der Erfindung ergeben sich aus der nachfolgenden Beschreibung bevorzugter Ausführungsbeispiele der Erfindung unter Bezugnahme auf die angeschlossenen Zeichnungen. Es zeigt:
- Fig. 1: eine Seitenansicht einer ersten Ausführungsform einer erfindungsgemäßen Vorrichtung,
- Fig. 2: eine Schrägansicht der Ausführungsform von Fig. 1,
- Fig. 3: eine Schrägansicht der Vorrichtung von Fig. 1 in einer nach unten geklappten Parkstellung,
- Fig. 4: eine Seitenansicht der Ausführungsform von Fig. 1 in einer Haltestellung für große Laufraddurchmesser,
- Fig. 5: eine Seitenansicht der Ausführungsform von Fig. 1 in einer Haltestellung für kleine Laufraddurchmesser,
- Fig. 6: eine Schrägansicht eines Sessels eines Sessellifts mit drei daran montierten Vorrichtungen gemäß Fig. 1 und einem daran montierten Fahrrad,
- Fig. 7: eine alternative Ausführungsform der erfindungsgemäßen Vorrichtung und
- Fig. 8: eine Seitenansicht einer dritten Ausführungsform einer erfindungsgemäßen Vorrichtung.

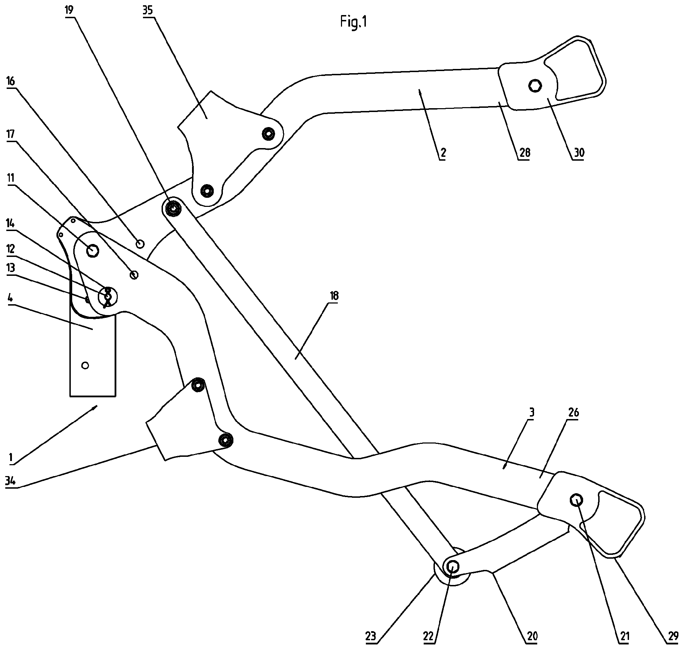

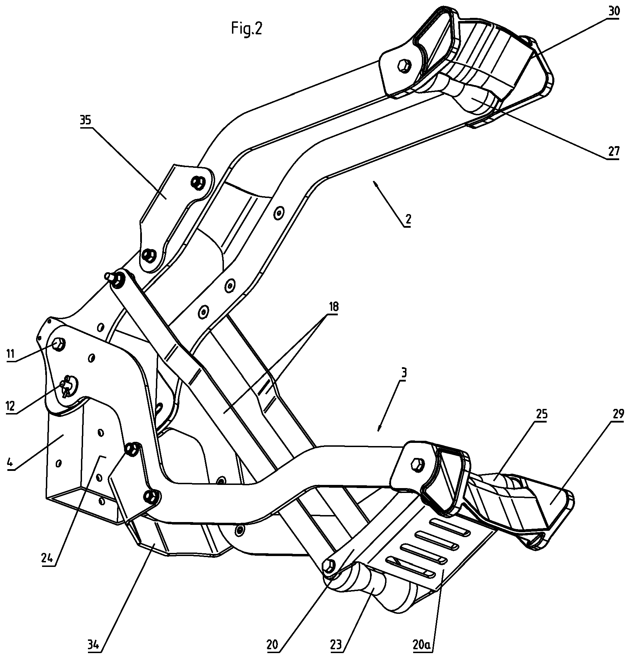

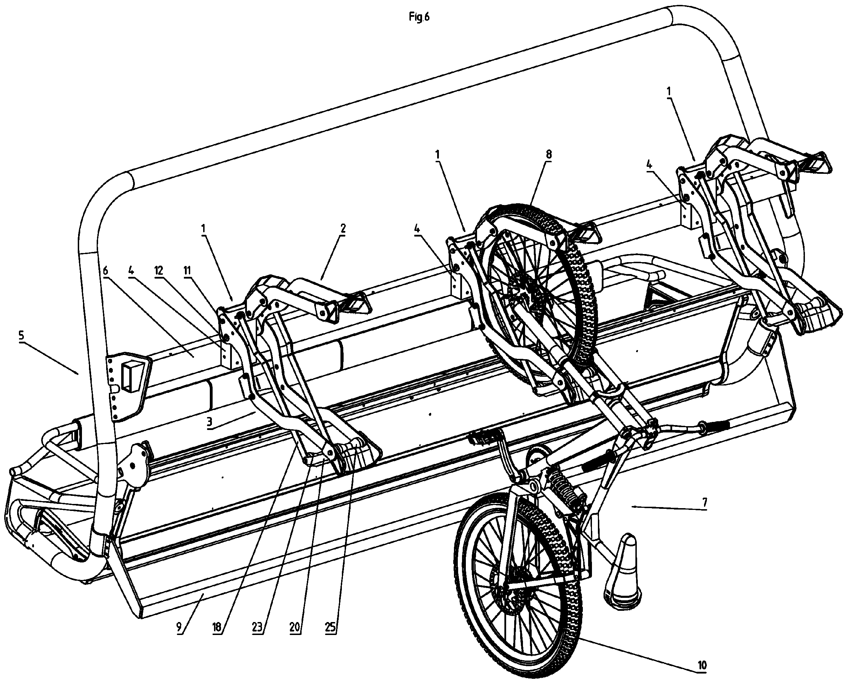

In den Fig. 1 bis 6 ist eine erste Ausführungsform einer erfindungsgemäßen Vorrichtung 1 dargestellt, die im Wesentlichen eine obere Halteeinrichtung 2 und eine untere Halteeinrichtung 3 aufweist, die an einem Träger 4 montiert sind. Der Träger 4 kann an einem Fahrbetriebsmittel einer Seilbahn, im dargestellten Ausführungsbeispiel an einem Sessel 5 eines Sesselliftes bzw. an einem Balken 6 des Sessels 5, so befestigt werden, dass ein an der Vorrichtung 1 z.B. über sein vorderes Laufrad 8 montiertes Fahrrad 7 etwa vertikal hängend montiert werden kann. Um eine Pendelbewegung des an der Vorrichtung 1 montierten Fahrrades zu verhindern, ist am Sessel 5 ein weiterer, unterer Balken 9 befestigt, an dem das Fahrrad 7 mit seinem hinteren Laufrad 10 anliegt. Die Befestigung der erfindungsgemäßen Vorrichtung 1 kann auch anders als in Fig. 6 dargestellt erfolgen. Beispielsweise könnten die Träger 4 direkt an einem Rahmenteil des Sessels 5 befestigt sein.

Die Anzahl der erfindungsgemäßen Vorrichtungen 1, die an einem Fahrbetriebsmittel befestigt werden, hängt von den individuellen Bedürfnissen bzw. Anforderungen der Betreiber der Seilbahn und den gegebenen Platzverhältnissen am Fahrbetriebsmittel ab. Es ist möglich, dass nur eine einzige Vorrichtung 1 an einem Fahrbetriebsmittel befestigt ist. Es können aber auch zwei oder mehr sein, beispielsweise drei Vorrichtungen 1, wie in der in Fig. 6 dargestellten Ausführungsform. Es können in bestimmten Intervallen auch Fahrbetriebsmittel mit und ohne erfindungsgemäße Vorrichtung 1 an einer Seilbahn angeordnet sein.

Die obere Halteeinrichtung 2 und die untere Halteeinrichtung 3 sind über eine Schwenkachse 11 am Träger 4 montiert. In der dargestellten Ausführungsform sind die obere Halteeinrichtung 2 und die untere Halteeinrichtung 3 über eine gemeinsame Schwenkachse 11 am Träger 4 montiert. Sie könnten aber auch über getrennte Schwenkachsen montiert sein.

Die untere Halteeinrichtung 3 ist in der in den Fig. 1, 2 und 4 bis 6 dargestellten Gebrauchs- oder Betriebsstellung starr bzw. unbeweglich mit dem Träger 4 verbunden. Dazu ist ein Arretierungsbolzen 12 vorgesehen, der durch eine entsprechende Öffnung 15 in der unteren Halteeinrichtung 3 und durch den Träger 4 gesteckt ist. Durch die Schwenkachse 11 und den Arretierungsbolzen 12 ist die untere Halteeinrichtung 3 in der Betriebsstellung somit arretiert.

Um das Ausmaß der Schwenkbewegung der oberen Halteeinrichtung 2 um die Schwenkachse 11 zu begrenzen, ist in der oberen Halteeinrichtung 2 eine Öffnung, in der konkreten Ausführungsform ein Langloch 13, vorgesehen, durch das ebenfalls der Arretierungsbolzen 12 gesteckt ist. Das Ausmaß der Schwenkbewegung der oberen Halteeinrichtung 2 ist damit durch die Lage und Länge des Langlochs 13 definiert.

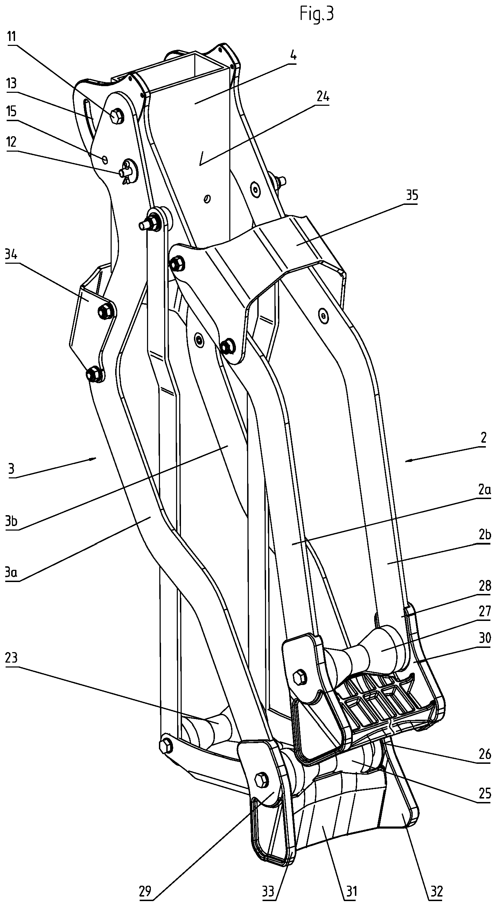

Wird ein Splint 14, der zur Sicherung des Arretierungsbolzens 12 durch diesen gesteckt ist, entfernt und der Arretierungsbolzen 12 ganz herausgezogen, können die obere und untere Halteeinrichtung 2, 3 gemeinsam nach unten in eine Parkstellung verschwenkt werden, wie in Fig. 3 dargestellt ist. Um die Lage der Halteeinrichtungen 2, 3 in der Parkstellung zu sichern, können in den Halteeinrichtungen 2, 3 Öffnungen 16, 17 angebracht sein, durch welche der Arretierungsbolzen 12 in den Träger 4 gesteckt werden kann.

An der oberen Halteeinrichtung 2 sind parallel angeordnete Zugstangen 18 an einem Lager 19 schwenkbar gelagert. An der unteren Halteeinrichtung 3 sind Kupplungsstangen 20 an einem Lager 21 schwenkbar gelagert. Die Zugstangen 18 und die Kupplungsstangen 20 sind an einem Gelenk 22 miteinander verbunden. Die Kupplungsstangen 20 sind in dieser Ausführungsform weiters mit einer Platte 20a miteinander verbunden, sodass eine U-förmige Wanne zur Aufnahme des Laufrades 8 gebildet wird.

An dem die Zugstange 18 und die Kupplungsstange 20 miteinander verbindenden Gelenk 22 ist eine untere Stützeinrichtung 23 für das Laufrad 8 angeordnet, wobei die untere Stützeinrichtung 23 alternativ an der Zugstange 18 oder der Kupplungsstange 20, vorzugsweise nahe am Gelenk 22, angeordnet sein könnte.

Die erfindungsgemäße Vorrichtung 1 weist in der dargestellten Ausführungsform weitere Stützeinrichtungen für das Laufrad 8 auf.

Es sind dies eine vordere Stützeinrichtung 24, die bei dieser Ausführungsform von einer Stützfläche des Trägers 4 gebildet wird, eine hintere Stützeinrichtung 25 im Bereich eines freien Endes 26 der unteren Halteeinrichtung 3 sowie eine obere Stützeinrichtung 27 im Bereich eines freien Endes 28 der oberen Halteeinrichtung 2.

Die Stützeinrichtungen 23, 25, 27 können Rollen sein, die im Mittelbereich einen kleineren Durchmesser als an den Randbereichen aufweisen. Damit erfolgt automatisch eine Zentrierung des Laufrades 8 beim Einhängen in die Vorrichtung 1. Bevorzugt ist eine der beiden Stützeinrichtungen 25, 27 an den freien Enden 26, 28 nicht beweglich bzw. drehbar, wodurch der Halt des Laufrades 8 in der Vorrichtung 1 verbessert wird.

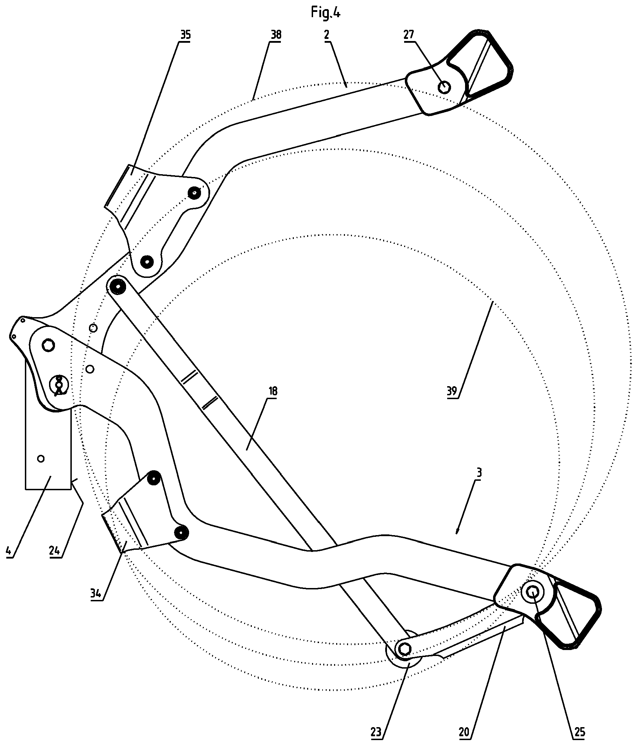

Das Gelenk 22 ist so angeordnet, dass es vertikal unter einer die vordere Stützeinrichtung 24 und die hintere Stützeinrichtung 25 verbindenden Linie 37 liegt. Die Geometrie der Vorrichtung 1 ist so dimensioniert, dass dann, wenn ein Laufrad 8 in die untere Halteeinrichtung 3 eingelegt wird, dieses zunächst über die hintere Stützeinrichtung 25 gehoben oder gerollt wird, bis es auf der unteren Stützeinrichtung 23 aufliegt und diese durch das Eigengewicht des Fahrrades 7 nach unten drückt. Dadurch wird die obere Halteeinrichtung 2 über die Zugstange 18 nach unten gezogen, bis deren obere Stützeinrichtung 27 von oben am Laufrad 8 anliegt. Währenddessen kommt das Laufrad 8 bei größeren Laufraddurchmessern (Fig. 4) auch an der vorderen Stützeinrichtung 24 in Anlage, sodass das Laufrad letztlich an vier Punkten in der Vorrichtung 1 eingespannt bzw. festgehalten wird.

In den in den angeschlossenen Zeichnungen dargestellten Ausführungsformen weisen die obere und untere Halteeinrichtung 2, 3 jeweils zwei parallele Schenkel 2a, 2b, 3a, 3b auf, zwischen denen das Laufrad 8 aufgenommen ist. Die Schenkel 2a, 2b, 3a, 3b sind am dem Träger 4 gegenüber liegenden Ende 26, 28 der Halteeinrichtungen 2, 3 mittels jeweils eines Verbindungsteils 29, 30 verbunden, der einen Mittelteil 31 und Führungswände 32, 33 aufweist. Die Verbindungsteile 29, 30 dienen einerseits einer festen Verbindung der Schenkel und erleichtern andererseits das Einführen des Laufrades 8 in die Vorrichtung 1.

Um das Einführen eines Laufrades 8 weiter zu erleichtern, kann eine nicht dargestellte Feder vorgesehen sein, deren Kraft ausreichend groß ist, die obere Halteeinrichtung 2 in der nach oben geschwenkten bzw. geöffneten Lage zu halten.

Die Zugstangen 18 und die Kupplungsstangen 20 sind in der dargestellten Ausführungsform in doppelter bzw. paralleler Ausführung vorhanden, um eine ausreichende Stabilität der Vorrichtung 1 zu gewährleisten. Grundsätzlich wäre es aber möglich, einzelne oder alle in doppelter bzw. paralleler Ausführung vorhandenen Teile (Schenkel 2a, 2b, 3a, 3b, Zugstangen 18 und Kupplungsstangen 20) nur einfach vorzusehen, ohne dass dies auf die grundlegende Funktion der erfindungsgemäßen Vorrichtung 1 einen Einfluss hätte.

Um einerseits die Stabilität der Halteeinrichtungen 2, 3 weiter zu erhöhen und andererseits einen zusätzlichen Halt für kleinere Laufraddurchmesser zu bieten, sind an beiden Halteeinrichtungen 2, 3 in der dem Träger 4 zugeordneten Hälfte eine weitere, vordere Stützeinrichtung 34 und eine Halterung 35 angeordnet, an denen ein Laufrad 8 anliegen kann, wenn es zu klein ist, um auch an der Stützfläche 24 des Trägers 4 anzuliegen.

Die Geometrie der Vorrichtung 1 kann so dimensioniert sein, dass beispielsweise alle üblichen Laufraddurchmesser von 24" bis 29" sicher gehalten werden können. Größere oder kleinere Laufraddurchmesser sind natürlich ebenso möglich.

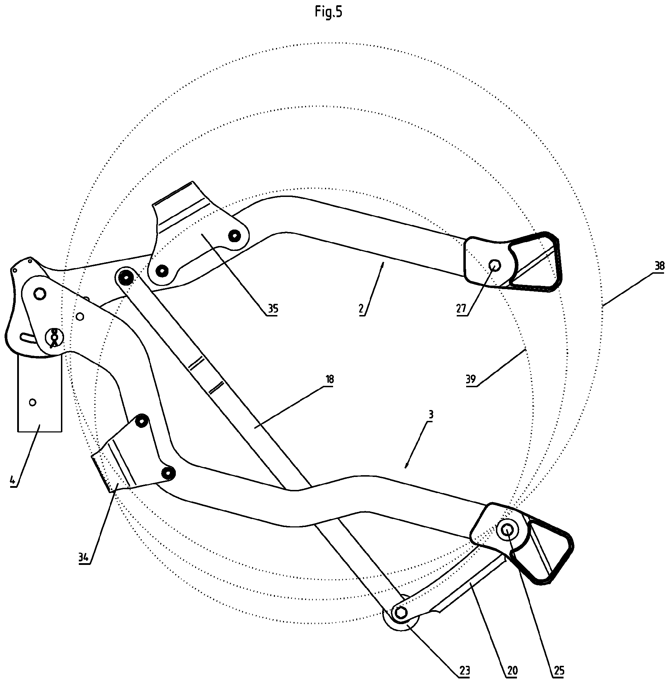

In den Fig. 4 und 5 ist dargestellt, wie sich die Vorrichtung 1 automatisch an unterschiedliche Laufraddurchmesser anpasst. In Fig. 4 ist die Vorrichtung 1 in einer Haltestellung für einen großen Laufraddurchmesser dargestellt, der durch einen großen Kreis 38 symbolisiert ist. Das Laufrad 8 liegt in diesem Fall an der vorderen Stützeinrichtung 24 (Stützfläche) und an der hinteren Stützeinrichtung 25 (Rolle) an. Die obere Halteeinrichtung 2 wird durch die untere Stützeinrichtung 23 (Rolle), auf der das Laufrad 8 aufliegt, nach unten gezogen, bis die obere Stützeinrichtung 27 (Rolle) ebenfalls am Laufrad 8 anliegt. In Fig. 5 ist die Vorrichtung 1 in einer Haltestellung für einen kleinen Laufraddurchmesser dargestellt, der durch einen kleinen Kreis 39 symbolisiert ist. Das Laufrad 8 liegt in diesem Fall an der vorderen Stützeinrichtung 34 und an der hinteren Stützeinrichtung 25 (Rolle) an. Die obere Halteeinrichtung 2 wird ebenfalls durch die untere Stützeinrichtung 23 (Rolle) nach unten gezogen, bis die obere Stützeinrichtung 27 (Rolle) am Laufrad 8 aufliegt.

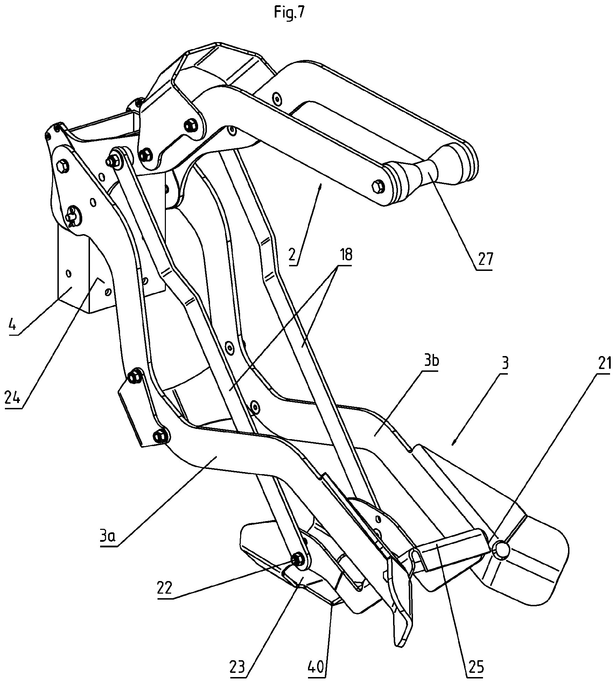

In Fig. 7 ist eine zweite Ausführungsform der erfindungsgemäßen Vorrichtung 1 dargestellt, bei der nur die obere Stützeinrichtung 27 als Rolle ausgeführt ist. Insbesondere sind die untere und hintere Stützeinrichtung 23, 25 als ein einziger starrer Bauteil ausgeführt, der gleichzeitig die Kupplungsstange 40 bildet und der einerseits über das Gelenk 21 mit den Schenkeln 3a, 3b der unteren Halteeinrichtung 3 und andererseits über das Gelenk 22 mit den Zugstangen 18 verbunden ist.

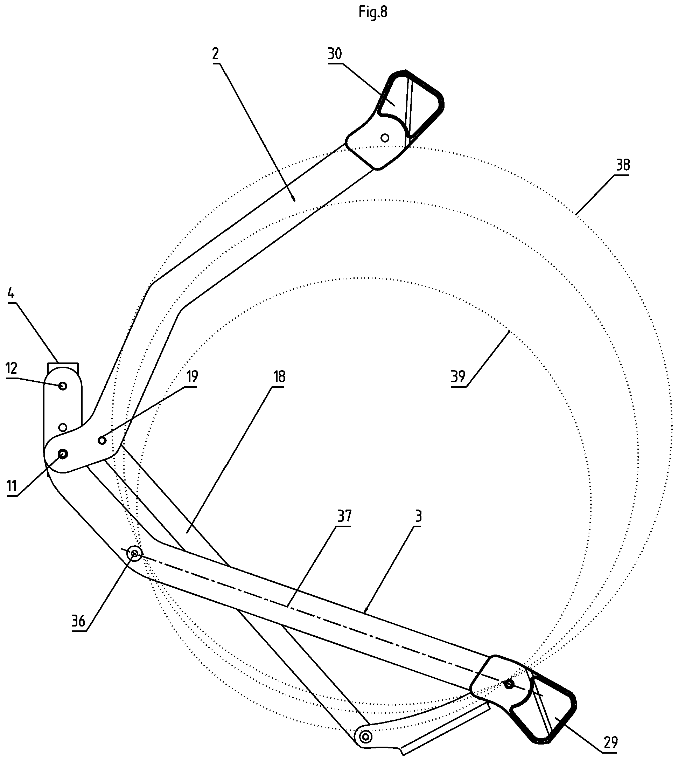

In Fig. 8 ist eine dritte Ausführungsform einer erfindungsgemäßen Vorrichtung 1 in einer geöffneten Stellung dargestellt, und zwar in einer Haltestellung für einen großen Laufraddurchmesser. Die Ausführungsform der Fig. 8 entspricht in ihrer grundlegenden Funktion jener der Fig. 1 bis 7, jedoch fehlt bei dieser Ausführungsform das Langloch, mit dem der Schwenkbereich der oberen Halteeinrichtung 2 begrenzt wird. Außerdem wird die vordere Stützeinrichtung nicht durch den Träger 4 gebildet, sondern durch eine an der unteren Halteeinrichtung 3 angeordnete weitere Stützeinrichtung 36.

## Patentansprüche

1. Vorrichtung (1) zum Halten bzw. Transportieren von Fahrrädern (7) mit einer in Gebrauchslage oberen und unteren Halteeinrichtung (2, 3) für ein Laufrad (8) der Fahrräder (7), die an einem Träger (4) montiert sind, wobei die obere Halteeinrichtung (2) um eine Schwenkachse (11) am Träger (4) verschwenkbar gelagert ist und wobei die obere und untere Halteeinrichtung (2, 3) über wenigstens eine Zugstange (18) miteinander verbunden sind, die mit der oberen Halteeinrichtung (2) gelenkig verbunden ist, **dadurch gekennzeichnet, dass** die untere Halteeinrichtung (3) bei Gebrauch starr mit dem Träger (4) verbunden ist, dass die Zugstange (18) mit der unteren Halteeinrichtung (3) über eine Kupplungsstange (20, 40) gelenkig verbunden ist, und dass an der Zugstange (18) und/oder der Kupplungsstange (20, 40) eine untere Stützeinrichtung (23) für das Laufrad (8) angeordnet ist.

2. Vorrichtung nach Anspruch 1, **dadurch gekennzeichnet, dass** sie eine vordere Stützeinrichtung (24, 34, 36) für den dem Träger (4) zugewandten Bereich des Laufrades (8) aufweist, und dass die vordere Stützeinrichtung (24) vorzugsweise eine Stützwand am Träger (4) ist.

3. Vorrichtung nach Anspruch 2, **dadurch gekennzeichnet, dass** die vordere Stützeinrichtung (34, 36) an der unteren Halteeinrichtung (3) montiert ist.

4. Vorrichtung nach einem der Ansprüche 1 bis 3, **dadurch gekennzeichnet, dass** im Bereich eines freien Endes (26) der unteren Halteeinrichtung (3) eine hintere Stützeinrichtung (25) angeordnet ist.

5. Vorrichtung nach einem der Ansprüche 2 oder 3 und Anspruch 4, **dadurch gekennzeichnet, dass** ein die Zugstange (18) und die Kupplungsstange (20) verbindendes Gelenk (22) in Gebrauchslage vertikal unter einer die vordere Stützeinrichtung (36) und hintere Stützeinrichtung (25) verbindenden Linie (37) liegt.

6. Vorrichtung nach Anspruch 5, **dadurch gekennzeichnet, dass** die untere Stützeinrichtung (23) im Bereich des Gelenks (22) angeordnet ist.

7. Vorrichtung nach einem der Ansprüche 1 bis 6, **dadurch gekennzeichnet, dass** im Bereich eines freien Endes (28) der oberen Halteeinrichtung (2) eine obere Stützeinrichtung (27) angeordnet ist.

8. Vorrichtung nach einem der Ansprüche 1 bis 7, **dadurch gekennzeichnet, dass** wenigstens eine der Stützeinrichtungen (23, 25, 27) als Rolle ausgeführt ist, die vorzugsweise im Mittelbereich einen kleineren Durchmesser als an den Randbereichen aufweist.

9. Vorrichtung nach einem der Ansprüche 1 bis 8, **dadurch gekennzeichnet, dass** an der oberen Halteeinrichtung (2) in der dem Träger (4) zugeordneten Hälfte eine Halterung (35) angeordnet ist.

10. Vorrichtung nach einem der Ansprüche 1 bis 9, **dadurch gekennzeichnet, dass** die obere Halteeinrichtung (2) eine Ausnehmung, vorzugsweise ein Langloch (13), aufweist, in die ein am Träger (4) montierter Arretierungsbolzen (12) eingreift.

11. Vorrichtung nach einem der Ansprüche 1 bis 10, **dadurch gekennzeichnet, dass** die untere Halteeinrichtung (3) über eine Schwenkachse (11) und einen Arretierungsbolzen (12) mit dem Träger (4) verbunden ist.

12. Vorrichtung nach Anspruch 10 und 11, **dadurch gekennzeichnet, dass** die Arretierungsbolzen (12) für die obere und die untere Halteeinrichtung (2, 3) entfernbar und die Halteeinrichtungen (2, 3) in eine Parkstellung verschwenkbar sind.

13. Vorrichtung nach einem der Ansprüche 10 bis 12, **dadurch gekennzeichnet, dass** für die obere und untere Halteeinrichtung (2, 3) ein gemeinsamer Arretierungsbolzen (12) verwendet wird.

14. Vorrichtung nach einem der Ansprüche 1 bis 13, **dadurch gekennzeichnet, dass** die obere und/oder untere Halteeinrichtung (2, 3) zwei parallele Schenkel (2a, 2b; 3a, 3b) aufweist, zwischen denen das Laufrad (8) aufgenommen ist, und dass die Schenkel (2a, 2b; 3a, 3b) vorzugsweise am dem Träger (4) gegenüber liegenden Ende (26, 28) mittels eines Verbindungsteils (29, 30) verbunden sind, der einen Mittelteil (31) und Führungswände (32, 33) aufweist.

15. Fahrbetriebsmittel, insbesondere Sessel (5), einer Seilbahn, **dadurch gekennzeichnet, dass** am Fahrbetriebsmittel wenigstens eine Vorrichtung (1) nach einem der Ansprüche 1 bis 14 montiert ist, und dass der Träger (4) der Vorrichtung (1) vorzugsweise an einem Balken (6) oder an einem Rahmenteil des Fahrbetriebsmittels befestigt ist.

## Claims

1. Apparatus (1) for holding and/or transporting bicycles (7), comprising an upper and a lower holding device (2, 3), as seen in the use position, for a wheel (8) of the bicycles (7), said holding devices being mounted on a carrier (4), wherein the upper holding device (2) is mounted on the carrier (4) in such a way as to be pivotable about a pivot axle (11), and wherein the upper and the lower holding device (2, 3) are connected to one another via at least one draw bar (18), which is connected to the upper holding device (2) in an articulated manner, **characterized in that** the lower holding device (3) is rigidly connected to the carrier (4) during use, **in that** the draw bar (18) is connected to the lower holding device (3) in an articulated manner via a coupling rod (20, 40), and **in that** a lower supporting device (23) for the wheel (8) is arranged on the draw bar (18) and/or the coupling rod (20, 40).

2. Apparatus according to claim 1, **characterized in that** it comprises a front supporting device (24, 34, 36) for the region of the wheel (8) that faces towards the carrier (4), and **in that** the front supporting device (24) is preferably a supporting wall on the carrier (4).

3. Apparatus according to claim 2, **characterized in that** the front supporting device (34, 36) is mounted on the lower holding device (3).

4. Apparatus according to one of claims 1 to 3, **characterized in that** a rear supporting device (25) is arranged in the region of a free end (26) of the lower holding device (3).

5. Apparatus according to one of claims 2 or 3 and claim 4, **characterized in that**, in the use position, an articulation (22) which connects the draw bar (18) and the coupling rod (20) is located vertically beneath a line (37) which connects the front supporting device (36) and the rear supporting device (25).

6. Apparatus according to claim 5, **characterized in that** the lower supporting device (23) is arranged in the region of the articulation (22).

7. Apparatus according to one of claims 1 to 6, **characterized in that** an upper supporting device (27) is arranged in the region of a free end (28) of the upper holding device (2).

8. Apparatus according to one of claims 1 to 7, **characterized in that** at least one of the supporting devices (23, 25, 27) is configured as a roller, which preferably has a smaller diameter in the central region than at the edge regions.

9. Apparatus according to one of claims 1 to 8, **characterized in that** a bracket (35) is arranged on the upper holding device (2) in the half assigned to the carrier (4).

10. Apparatus according to one of claims 1 to 9, **characterized in that** the upper holding device (2) has an aperture, preferably an elongate hole (13), in which an arresting pin (12) mounted on the carrier (4) engages.

11. Apparatus according to one of claims 1 to 10, **characterized in that** the lower holding device (3) is connected to the carrier (4) via a pivot axle (11) and an arresting pin (12).

12. Apparatus according to claim 10 and 11, **characterized in that** the arresting pins (12) for the upper and the lower holding device (2, 3) can be removed and the holding devices (2, 3) can be pivoted into a parked position.

13. Apparatus according to one of claims 10 to 12, **characterized in that** a common arresting pin (12) is used for the upper and the lower holding device (2, 3).

14. Apparatus according to one of claims 1 to 13, **characterized in that** the upper and/or lower holding device (2, 3) has two parallel limbs (2a, 2b; 3a, 3b), between which the wheel (8) is accommodated, and **in that** the limbs (2a, 2b; 3a, 3b) are connected, preferably at the end (26, 28) opposite to the carrier (4), by means of a connecting part (29, 30) which has a central part (31) and guide walls (32, 33).

15. Transporting means, in particular chair (5), of a cableway, **characterized in that** at least one apparatus (1) according to one of claims 1 to 14 is mounted on the transporting means, and **in that** the carrier (4) of the apparatus (1) is fastened preferably to a bar (6) or to a frame part of the transporting means.

## Revendications

1. Installation (1) pour retenir et transporter des vélos (7) avec un dispositif de maintien supérieur et inférieur (2, 3) dans le sens d'utilisation pour une roue (8) des vélos (7), qui sont montés sur un support (4), le dispositif de maintien supérieur(2) étant supporté de façon pivotante autour d'un axe de pivotement (11) sur le support (4) et les dispositifs de maintien supérieur et inférieur (2, 3) étant reliés entre eux par au moins une barre de traction (18) qui est articulée sur le dispositif de maintien supérieur (2), **caractérisée en ce que** le dispositif de maintien inférieur (3) est relié de façon rigide au support (4) lors de l'utilisation, **en ce que** la barre de traction (18) est articulée au dispositif de maintien inférieur (3) par une barre de couplage (20, 40) et **en ce qu'**est disposée sur la barre de traction (18) et/ou la barre de couplage (20, 40) un dispositif d'appui inférieur (23) pour la roue (8).

2. Installation selon la revendication 1, **caractérisée en ce qu'**il comporte un dispositif d'appui antérieur (24, 34, 36) pour la partie de la roue (8) tournée vers le support (4) et **en ce que** le dispositif d'appui antérieur (24) est de préférence une paroi d'appui sur le support (4).

3. Installation selon la revendication 2 , **caractérisée en ce que** le dispositif d'appui antérieur (34, 36) est monté sur le dispositif de maintien inférieur (3).

4. Installation selon l'une des revendications 1 à 3, **caractérisée en ce qu'**un dispositif d'appui postérieur (25) est disposé dans la région d'une extrémité libre (26) du dispositif de maintien inférieur (3).

5. Installation selon la revendication 2 ou 3 et la revendication 4, **caractérisée en ce qu'**une articulation (22) reliant la barre de traction (18) et la barre de couplage (20) est placée de façon verticale dans la position d'utilisation sous une ligne (37) reliant le dispositif d'appui antérieur (36) et le dispositif d'appui postérieur (25).

6. Installation selon la revendication 5, **caractérisée en ce que** le dispositif d'appui inférieur (23) est disposé au niveau de l'articulation (22).

7. Installation selon l'une des revendications 1 à 6, **caractérisée en ce qu'**un dispositif d'appui supérieur (27) est disposé au niveau d'une extrémité libre (28) du dispositif de maintien supérieur (2).

8. Installation selon l'une des revendications 1 à 7, **caractérisée en ce qu'**au moins un des dispositifs d'appui (23, 25, 27) est conformé comme un rouleau, qui présente de préférence un plus petit diamètre dans sa partie médiane que dans ses parties de bord.

9. Installation selon l'une des revendications 1 à 8, **caractérisée en ce qu'**une monture (35) est montée sur le dispositif de maintien supérieur (2) dans la moitié associée au support (4).

10. Installation selon l'une des revendications 1 à 9, **caractérisée en ce que** le dispositif de maintien supérieur (2) présente un évidement, de préférence un trou oblong (13), dans lequel se met en prise un boulon de blocage (12) monté sur le support (4).

11. Installation selon l'une des revendications 1 à 10, **caractérisée en ce que** le dispositif de maintien inférieur (3) est relié au support (4) par un axe de pivotement (11) et un boulon de blocage (12).

12. Installation selon les revendications 10 et 11, **caractérisée en ce que** les boulons de blocage (12) pour les dispositifs de maintien supérieur et inférieur (2, 3) peuvent être enlevés et les dispositifs de maintien (2, 3) peuvent pivoter dans une position de rangement.

13. Installation selon l'une des revendications 10 à 12, **caractérisée en ce qu'**un boulon de blocage (12) commun est utilisé pour les dispositifs de maintien supérieur et inférieur (2, 3).

14. Installation selon l'une des revendications 1 à 13, **caractérisée en ce que** le dispositif de maintien supérieur et/ou inférieur (2, 3) présente deux bras parallèles (2a, 2b ; 3a, 3b) entre lesquels se loge la roue (8) et **en ce que** les bras (2a, 2b ; 3a, 3b) sont de préférence reliés, à l'extrémité (26, 28) faisant face au support (4), au moyen d'une partie de liaison (29, 30) qui présente une partie médiane (31) et des parois de guidage (32, 33).

15. Véhicule, en particulier siège (5), d'un téléphérique, **caractérisé en ce qu'**au moins une installation (1) selon l'une des revendications 1 à 14 est montée sur le véhicule et **en ce que** le support (4) de l'installation (1) est de préférence fixé sur une barre (6) ou sur une partie de cadre du véhicule.
